# EUROPEAN PATENT SPECIFICATION

(11) **EP 2 776 858 B1**
(45) Date of publication and mention of the grant of the patent: **09.05.2018**
(21) Application number: 12847286.7
(22) Date of filing: 13.11.2012
(51) Int. Cl.: G01S 19/39, G01C 21/04, A63B 69/36, A63B 71/06, G01C 21/36

(54) **SYSTEM AND METHOD OF STORING AND COMMMUNICATING THE LOCATION OF A PIN ON A GOLF COURSE**
SYSTEM UND VERFAHREN ZUR SPEICHERUNG UND MITTEILUNG DES ORTES EINES FLAGGSTOCKS AUF EINEM GOLFPLATZ
SYSTÈME ET PROCÉDÉ DE STOCKAGE ET DE COMMUNICATION DE L'EMPLACEMENT D'UN TROU DE GOLF SUR UN PARCOURS DE GOLF

(30) Priority: 10.11.2011 US 201161558272 P
(43) Date of publication of application: 17.09.2014
(73) Proprietor: Skyhawke Technologies LLC, Ridgeland, MS 39157 (US)
(72) Inventor: EDMONSON, Richard, C., Ridgeland, MS 39157 (US); MEADOWS, James, W., Madison, MS 39110 (US)
(74) Representative: Samuels, Adrian James
(86) International application number: PCT/US2012/064825
(87) International publication number: WO 2013/071291

(56) References cited:
- US-A- 4 783 071
- US-A- 5 797 809
- US-A1- 2003 103 001
- US-A1- 2010 174 480
- US-A1- 2010 179 005
- US-B1- 6 456 938
- US-B2- 7 118 498

## Description

### BACKGROUND

### FIELD OF THE DISCLOSURE

The present disclosure relates to a system and method for storing and communicating the location of the pin on one or more greens on a golf course. The golf pin location is uploaded for incorporation in a course map depicting the golf course, and used to measure a distance from the location aware device to the pin location.

### DESCRIPTION OF RELATED ART

In the game of golf, it is desirable for a player to have accurate distance measurements corresponding to a golf hole before taking a shot. For example, during the course of playing a game of golf, the golfer must often determine the distance between the golf ball and various other locations on the golf holes such as hazards, end of the fairway, bunkers, front, middle, back of the green. Another important distance to know is the distance between the golf ball and the pin on the green. Knowing the distance that the ball must travel to the pin is one of the most important factors the golfer must consider for selection of the proper golf club.

Previously, it was necessary for a player to estimate the distance to the pin on the green by using markings on the course and/or a yardage book indicating distances between various points on the course to the green. However, the use of portable location aware electronic devices has become common in the game of golf to ascertain distances from a player's current position to the golf pin. These location aware devices are typically in the form of a handheld computing device with geolocation awareness, such as GPS devices, that may be capable of displaying an outline of a golf hole and distances from the location aware device to the golf pin.

In the related art however, in order to determine the distance from a location aware device to the pin on a green, it would be necessary to use surveying or other equipment capable of determining a geolocation, to be physically placed at the pin location to obtain the actual pin location coordinates. These pin coordinates would then have to be uploaded and stored and then provided to the user. A drawback with related art devices is that each time a pin location is moved on the green, it would be necessary for golf course personnel to physically take the survey or other geolocation determining equipment to the new pin location and repeat the steps of recording the position and transmitting the information. US 6456938 and US 2010/0179005 each disclose a device capable of recording geophysical golf data.

### SUMMARY

According to the invention there is provided a method according to claim 1 and a system according to claim 13. In view of the above noted shortcomings in acquiring a pin location for pins on the golf course, the inventors have derived a system that allows the location of the golf pin or cup to be entered into a computer with a geo-referenced depiction of the green, typically by golf course personnel. Additionally, the inventors have derived a system that allows the golfer to enter pin locations.

Allowing the pin location to be determined in this manner and then provided to the golfer for use during a round of golf is distinguished from the related art methods in which surveying or other equipment capable of determining a geolocation is physically placed at the pin location and the actual location coordinates obtained and uploaded as discussed above.

Instead, in one or more examples of the present invention, the pin location is determined using an existing course map and a computer with a geo-referenced depiction of the green, or entered by the golfer, but in either case the pin location can be determined without placing at the actual pin location surveying or other equipment capable of determining the pin's geolocation.

An nonlimiting example of the present invention includes a method of storing and communicating the location of a pin on a green on a golf course, the method including selecting on a display screen, one or more greens of a plurality of greens of the golf course, for setting a pin position on the green, setting a position of the pin on one or more of the plurality of greens, uploading the position of the pin to a central information processing site and database, storing the position of the pin on each of the one or more greens, and downloading the pin positions to a location aware device. The location aware device can thereafter, using methods known to those skilled in the art, determine the distance from the location aware device to the pin position.

As should be apparent, the invention can provide a number of advantageous features and benefits. It is to be understood that, in practicing the invention, an embodiment can be constructed to include one or more features or benefits of embodiments disclosed herein, but not others. Accordingly, it is to be understood that the preferred embodiments discussed herein are provided as examples and are not to be construed as limiting, particularly since embodiments can be formed to practice the invention that do not include each of the features of the disclosed examples.

### BRIEF DESCRIPTION OF THE DRAWINGS

A more complete appreciation of this disclosure and many of the attendant advantages thereof will be readily obtained as the same becomes better understood by references to the following detailed description when considered in connection with the accompanying drawings, wherein:
Figure 1 illustrates an exemplary computer program application dashboard or initial screen for use in one or more embodiments;
Figure 2 illustrates a Pin Sheet screen according to an example;
Figure 3 illustrates the edit screen to set or change zone locations in one or more embodiments;
Figure 4 illustrates the edit screen displaying a pin view in an example;
Figure 5 illustrates the edit screen displaying a zone view in an example;
Figure 6 illustrates a modified zone view after dropping the zones to their proper hypothetical location in an example;
Figure 7 illustrates a print function for the PinPoint program in an exemplary embodiment;
Figure 8 shows a printed pin sheet showing zones;
Figure 9 illustrates written pin sheets showing the pin on each green located by the number of yards or paces from the front of the green and from one of the sides of the green in an example;
Figure 10 illustrates a display of where a pin is located on a green according to an example;
Figure 11 illustrates a possible display in an example of the invention in which information is provided by the location aware device member;
Figure 12 depicts an example of the invention in which a member enters the data for a golf course;
Figure 13 illustrates a display for a member so as to drag and drop zone numbers to an appropriate location on the green screen display in one or more embodiments;
Figure 14 shows a result of dragging and dropping zone numbers on the green screen display shown in Fig. 13;
Figure 15 illustrates an exemplary hardware configuration of a location-aware device of one or more exemplary embodiments;
Figure 16 illustrates a hardware diagram of a processing system embodying aspects of one or more examples;
Figure 17 illustrates a main menu appearing on the device screen according to an example;
Figure 18 illustrates the selection by the user of using Pin locations;
Figure 19 illustrates the selection of Zone locations;
Figure 20 illustrates an example of a screen that allows a user to select an option to set the pin locations himself;
Figure 21 illustrates an example of a green in which the golfer can set a custom pin location as discussed with respect to Fig. 20;
Figure 22 illustrates a display for the user to declare if he is finished setting pin locations as discussed with respect to the example of Figs. 20-21;
Figure 23 illustrates a display for the user to input which hole of the golf course the user wants to start on;
Figure 24 illustrates a display of an entire hole chosen in the display shown in Fig. 23 with respect to an embodiment;
Figure 25 illustrates a green only view according to an embodiment;
Figure 26 illustrates an exemplary screen shown to the user with respect to one or more embodiments for beginning the round of golf;
Figure 27 illustrates an option for the user to view the scoring for the round of golf as well as the option for the Pin Location setting to be on or off; and
Figure 28 illustrates a display for the user to select a zone to use with respect to exemplary embodiments.

### DETAILED DESCRIPTION OF PREFERRED EMBODIMENTS

Aspects of the present disclosure will now be described below with reference to the drawings, wherein like reference numerals designate identical or corresponding parts throughout several views.

Typically, other prior art methods require surveying or other equipment capable of determining a geolocation to be physically placed at the pin location and the actual location coordinates obtained and uploaded as discussed above. However, with respect to one or more examples described herein, the pin location is determined using references from existing course maps and a computer with a geo-referenced depiction of the green, or entered by the golfer. That is, in one or more examples, it is not necessary to have surveying or other equipment capable of determining a geolocation at the pin location.

One or more exemplary embodiments relate to allowing the location of the golf pin or cup to be entered by golf course personnel or golfer as described below with respect to further examples. This feature is called PinPoint. The golf pin location is uploaded for incorporation in a digitized, geo-referenced course map depicting the golf course, such as those course maps offered by SkyGolf, for use with a location aware device, such as the SkyCaddie GPS based rangefinder, and using that location information to measure distance from the location aware device to the pin location. It should be appreciated that while reference is made to a SkyCaddie location aware device, embodiments of the invention are equally applicable to other location aware devices.

Similarly, while reference is made to SkyGolf, embodiments of the invention are equally applicable to any entity that maintains and makes available to users, though, for example, the internet, wireless communications or other communications portals, a geo-referenced golf course map which is used, for example, to determine distances during golf play using a location aware device onto which the digital map has been downloaded through any number of recognized embodiments. Additionally, while reference is made to locating the pin on each hole of a golf course, one or more systems and methods of the invention are useful for locating the pin location on one or more holes and not necessary all holes on the course. For example, on some days only one or two pins are moved so that only the locations of those pins that were moved need to be updated.

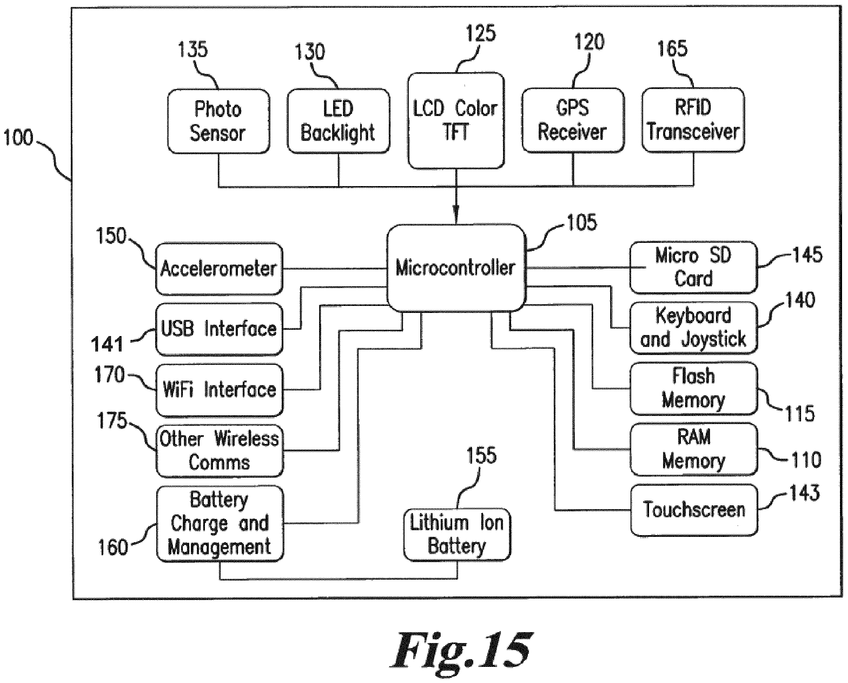

The location aware device could be hand held or golf cart mounted for example, and would include for example, a processor, memory, display and a communications interface to provide access to the internet. An exemplary hardware configuration of a location-aware device is described in reference to Fig. 15. Fig. 15 is a block diagram showing an exemplary configuration of a location-aware portable device 100 that is used by a player to obtain golf course related distance information. The location-aware device 100 may be a handheld device having firmware and software that allow control of the operation of the device 100. The location-aware device may include multiple components that are managed by microcontroller 105 running software stored in a flash memory 115 or random-access memory 110, for example. The microcontroller 105 serves as an interface and controller for a plurality of hardware systems and device application systems of the location-aware device.

In an exemplary embodiment, the primary purpose of the portable location-aware device 100 is to provide a golfer with distance information to various points on a green (such as the input pin information discussed above), to various targets and hazards on the golf course. The distance information is provided to the user by referencing mapped data stored in the flash memory 110, for example, to real time Global Positioning System (GPS) position data acquired by an onboard GPS receiver 120. The microcontroller 105 processes the GPS data and derives calculations to the mapped points and various areas on the course. This information is then displayed to the player through a graphical user interface that includes, for example, a sunlight readable color thin-film transistor (TFT) liquid crystal display (LCD) display 125 having a light-emitting diode (LED) backlight 130. The LED backlight 130 is controlled by a photosensor 135 that measures ambient light and adjusts the brightness of the backlight accordingly. The LCD 125 is transflective so the backlight brightness is reduced when the unit is in sunlight and the brightness is increased when the unit is in low light conditions.

The microcontroller 105 also receives input from the player by a keypad and/or joystick 140. The user input may correspond to a command to move a cursor on the graphical user interface, a command to enter data, a command to select a particular course for display, etc. The location-aware device 100 may also include a touch screen 143 that would be used by the player to enter information and/or otherwise control the location-aware device 100.

As noted above, the mapped course data may be stored in an onboard flash memory 115, which can be updated via connection of a Universal Serial Bus (USB) port 141, micro-Secure Digital (micro-SD) card 145, WiFi radio 170 or other wireless communications device 175. An operating system of the microcontroller 105 and various applications executed by the microcontroller 105 may also utilize the onboard RAM 110 for storage of temporary data.

An onboard accelerometer 150 determines an orientation of the unit and measures acceleration along a vector. In one exemplary embodiment, the axis orientation and acceleration information is used by the microcontroller 105 to rotate the course data displayed via the graphical user interface to align with the player's orientation on a particular hole, for example. The location-aware device is powered by a battery 155 that is managed by a charging circuit and power management circuit 160 to provide power to the various components of the location-aware device. The location-aware device also includes a radiofrequency (RF) transceiver 165 that receives signals transmitted from tags, which may transmit a club tag ID, tag battery status and other sensor data if the tag is in an operational state attached to a club.

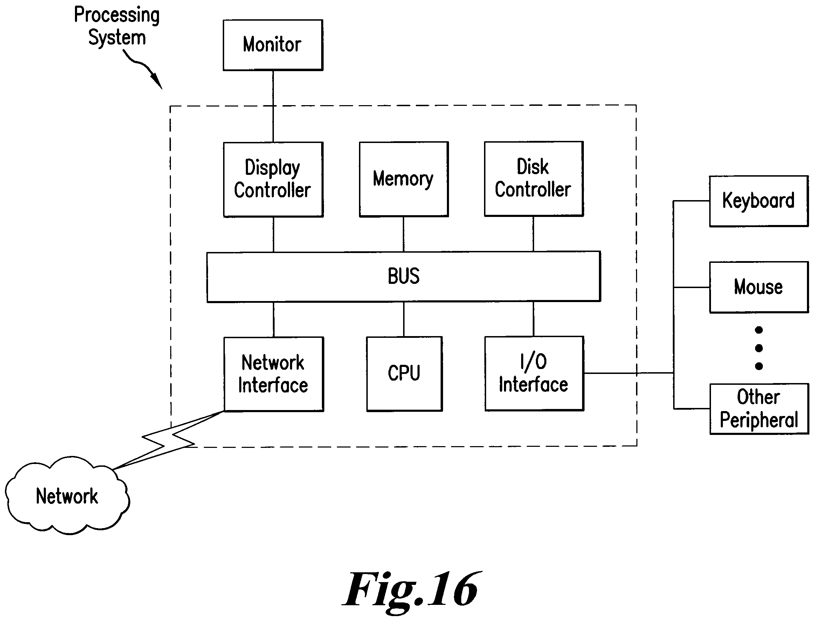

Figure 16 is a hardware diagram of an information processing and viewing device embodying aspects of this disclosure, including aspects involving a computer, tablet, smart phone, and the like, utilized to input pin positions, which can communicate with a network, mobile terminal or other processing device. The processes, algorithms and electronically driven systems described herein can be implemented via a discrete control device or computing system consistent with the structure shown in Fig. 16. Such a system is described herein as a processing system. Fig. 16 is also a hardware diagram of the central information processing site and database, which, as one skilled in the art can appreciate, can be any of a number of readily available computer servers.

As shown in Fig. 16, a processing system in accordance with this disclosure can be implemented using a microprocessor or its equivalent, such as a central processing unit (CPU) or at least one application specific processor ASP (not shown). The microprocessor utilizes a computer readable storage medium, such as a memory (e.g., ROM, EPROM, EEPROM, flash memory, static memory, DRAM, SDRAM, and their equivalents), configured to control the microprocessor to perform and/or control the processes and systems of this disclosure. Other storage mediums can be controlled via a controller, such as a disk controller, which can controls a hard disk drive or optical disk drive.

The microprocessor or aspects thereof, in an alternate embodiment, can include or exclusively include a logic device for augmenting or fully implementing this disclosure. Such a logic device includes, but is not limited to, an application-specific integrated circuit (ASIC), a field programmable gate array (FPGA), a generic-array of logic (GAL), and their equivalents. The microprocessor can be a separate device or a single processing mechanism. Further, this disclosure can benefit form parallel processing capabilities of a multi-cored CPU.

In another aspect, results of processing or the input of data in accordance with this disclosure can be displayed via a display controller to a monitor. The display controller would then preferably include at least one graphic processing unit for improved computational efficiency. Additionally, an I/O (input/output) interface is provided for inputting data from a keyboard or a pointing device (not shown) for controlling parameters of the various processes and algorithms of this disclosure can be connected to the I/O interface to provide additional functionality and configuration options, or control display characteristics. Moreover, the monitor can be provided with a touch-sensitive interface to a command/instruction interface, and other peripherals can be incorporated, including a scanner or a web cam when image-based data entry is used.

The above-noted components can be coupled to a network, as shown in Fig. 16, such as the Internet or a local intranet, via a network interface for the transmission or reception of data, including controllable parameters. The network provides a communication path to the mobile device, which can be provided by way of packets of data. Additionally, a central BUS is provided to connect the above hardware components together and provides at least one path for digital communication therebetween.

As discussed below with respect to one or more exemplary embodiments of the invention, using a golf course map that is geo-referenced, a green on a golf course is graphed or displayed and the pin location determined, utilizing one of several methods. Exemplary methods in determining the pin location include zone mode, grid mode or pin sheet mode as set forth in greater detail below.

In usual practice, with the use of zones in zone mode, a golf course superintendent or other golf course personnel divides the green on each hole into a number of zones, generally either 3 or 4 zones, but any number of zones is within the scope of the present invention. These zones are varied by hole. For example, zone 1 on hole 1 may be in the front portion of the green, while zone 1 on hole 2 may be in the back portion, etc. The pin on each hole is located each day in the same zone. For example, on Thursday the pins may be placed in zone 3, while on Saturday the pins may be moved to zone 2. Moving the pin to various locations on the green is done to prevent wear in a particular area of a green, as well as to vary the challenge of an approach into the green for those players playing the course multiple times over several days. Further, the purpose in placing zones with the same number in different parts of different greens is to improve the golfer's experience so that, for instance, the pins are not all put on the front portion of the green on one day and all on the back portion of the green on another day. In each round, the golfer will be playing to pins located in the front on some greens, in the back of others, and one side or another on still others.

An exemplary method utilizing the zone mode, is initiated by entering into the course map, the locations of each zone on one or more of the holes for a particular golf course and uploading the locations to the server, or central information processing site and database, housing the course map for download to location aware devices used by golfers, such as, for example, uploading the locations to SkyGolf for download and use by golfers using a SkyCaddie device. The zones then become a geo-referenced feature of the map just like other features, such as, for example, the location of a sand trap, a creek or the green itself. Advantageously, the zones only have to be entered into the course map one time. Thereafter, the zones for the greens will thereafter be available to any user who downloads the course map onto their location aware device. The actual incorporating of the pin location into the course map available for download to location aware devices can occur at either the golf course information processing and viewing device or at the central information processing site and database. In the latter case, the pin location would be entered into the information processing and viewing device and uploaded to the central information processing site and database for incorporation onto the course map. One reason for having the actual incorporation of the pin location into the course map performed at the central information processing site and database is to allow the course map supplier to maintain tighter control over the course map. In the former case, the information processing and viewing device would be given administrative access to the course map, allowing changes to be made to the course map sufficient to allow the pin locations to be incorporated into the course map and eventual download to location aware devices.

According to an aspect of the invention, once the zone enabled course map is downloaded onto the location aware device, before each round of golf, any user by way of a "setting" choice on the location aware device for example, enters the zone applicable that day. Distances from the location device, for example held in the golfers hand, to that day's zone on the green can then be determined and displayed for viewing on the location device for any of the golf holes played by the user throughout the round of golf.

In a nonlimiting example, in the zone mode, zones are entered into the course map by the golf course personnel using a PinPoint computer program for example. Further examples provide for golfers themselves to enter the zones into the course map, as described below. It should be appreciated that any authorized person with the appropriate computing devices would be able to enter the zones. However the zones are entered, a computer program application, typically but not exclusively provided by the course map supplier, such as, for example SkyGolf, is utilized.

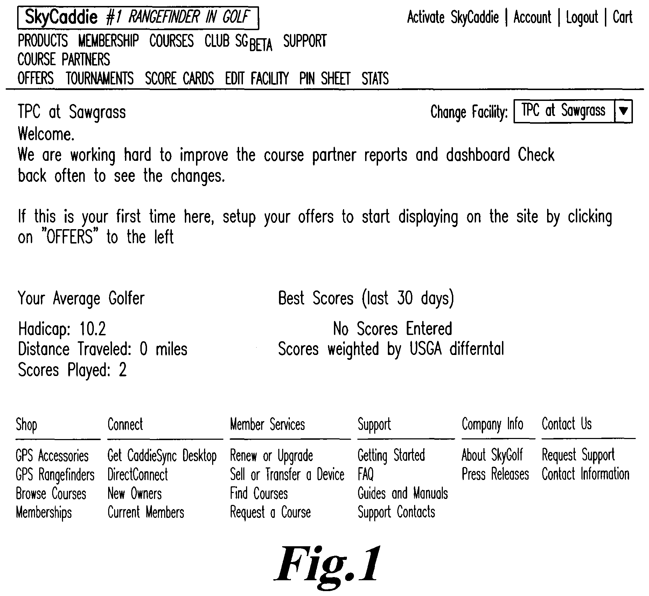

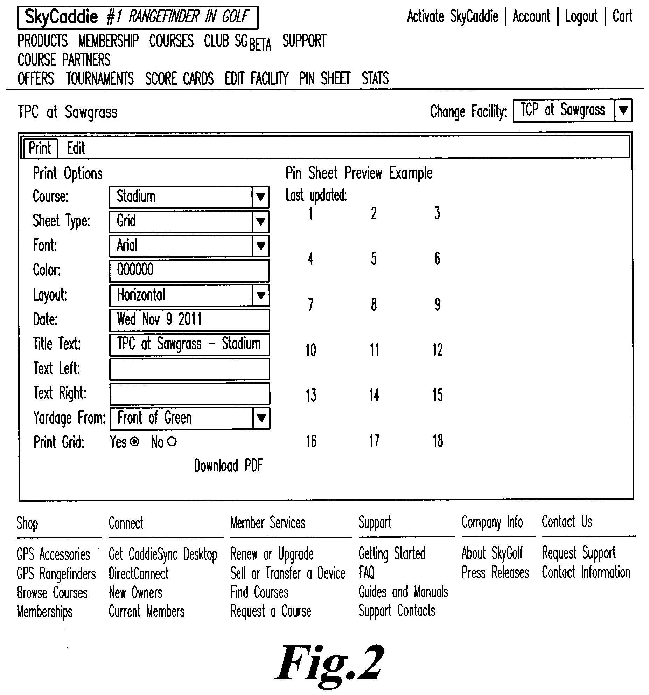

In the example shown in Fig. 1, once the PinPoint computer application is accessed, the process is initiated through an initial menu or "dashboard" screen, as depicted in Fig. 1. Once a user is logged in and the dashboard page is displayed, the course superintendent for example, would click on the Pin Sheet tab. The Pin Sheet tab takes the course superintendent to the pin sheet preview screen as shown in Fig. 2. This pin sheet preview screen is capable of displaying each green. For example, instead of or in addition to numbers 1-18 representing the 18 greens of the golf course, a further example provides for a depiction of the 18 greens to be shown. The greens that are displayed can include a general depiction of the green and an outline of the shape of the green as viewed from above. In an alternate embodiment, a detailed depiction of the greens in the pin sheet preview screen can be provided showing, bunkers near the green, water hazards, out of bounds near the green, general slope of the green shown by visual indicators on the green, elevation change of the green, and the like. It should be appreciated that any information that could be useful to the user could be shown with the green depiction. Once in edit mode as described below, the greens displayed are geo-referenced to the course map so that selecting a location on the displayed green associates that location with the like location on the course map.

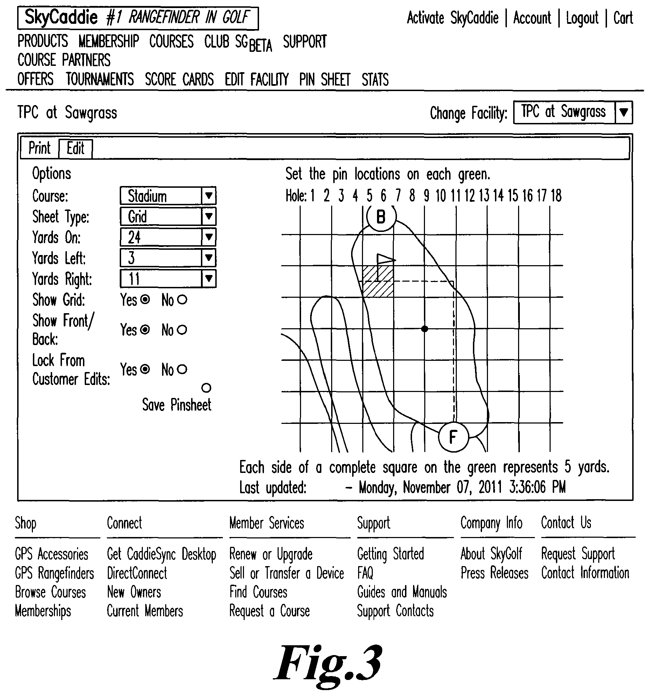

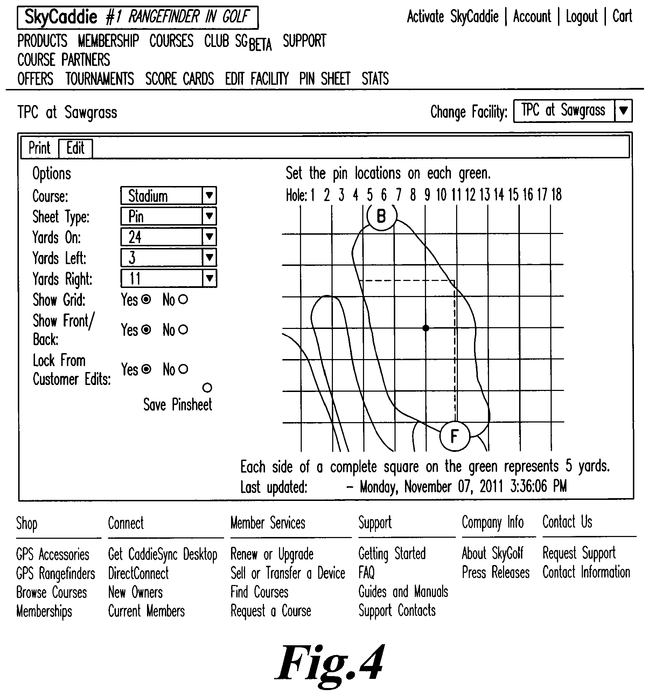

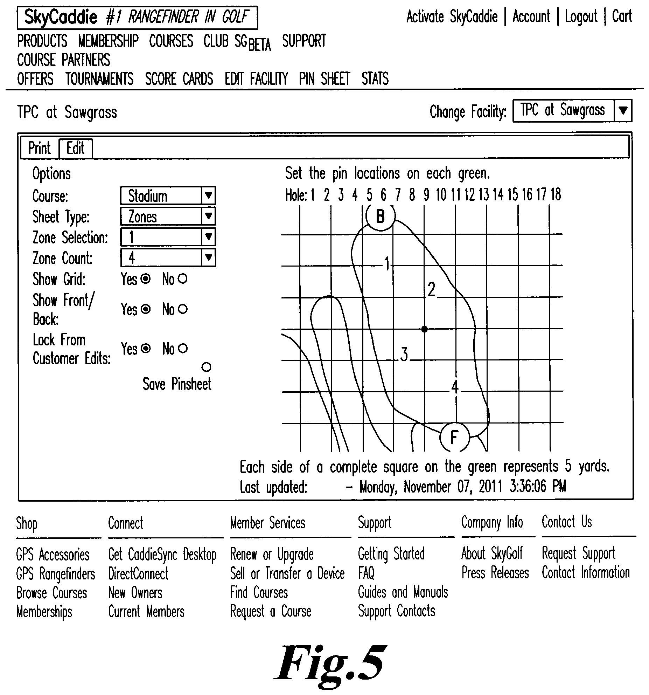

In one or more examples, to set or change zone locations, the superintendent would click on the Edit tab, taking the superintendent to the edit screen as best shown in Fig. 3. The edit screen displays one of three views-grid mode shown in Fig. 3, pin mode shown in Fig. 4 or zone mode shown in Fig. 5. The particular mode to be displayed is selected using the Sheet Type drop down option, shown in this example on the left side of the screen in Figs 3-5. The superintendent or other authorized user, would select the hole for which he desires to set the zones by clicking on the appropriate number on the right side of the screen above the green depiction. As an example, in Figs. 3, 4 and 5, hole 1 of the TPC at Sawgrass, Stadium course is selected. The green depicted on the display screen in the three Figures is the geo-referenced hole 1 green of the TPC at Sawgrass Stadium course from the SkyGolf course map. Because the green displayed is geo-referenced to the course map, clicking on a point on the screen display will geo-reference that point on the course map. In the Figure 3 example, the green display can be overlaid with horizontal and vertical grid lines, each completed grid square representing 5 yards in width and 5 yards in height, for example. However, any dimension of the grid size in yards or meters is within the scope of the present invention. The gird lines can be turned on or off as desired using the grid option button on the left side of the screen.

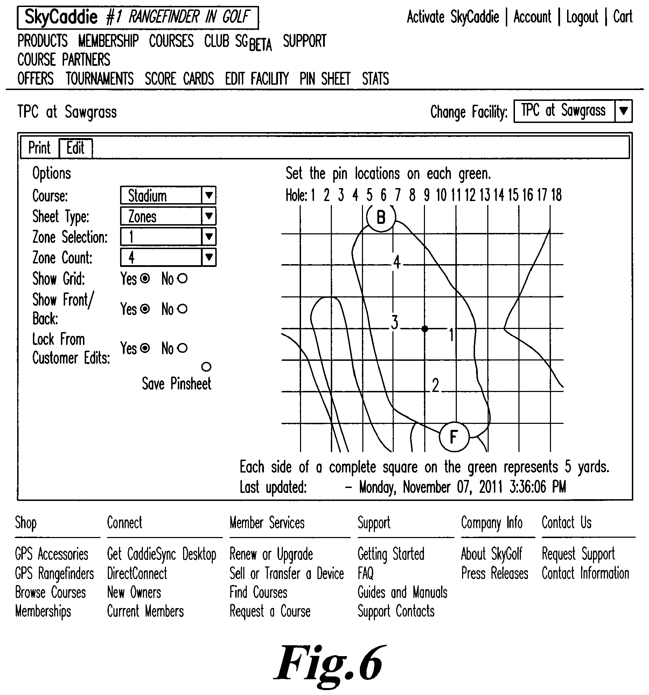

In a preferred embodiment of the invention with respect to using the zone mode shown in Fig. 5, the superintendent uses the Zone Count drop down option on the screen to select the number of zones for the displayed green. In this example, four zones is selected. A number appears on the screen for each zone selected. That is, in Figure 5, the numbers 1, 2, 3 and 4 randomly appear on the screen since four zones was selected. The superintendent can then drag and drop each zone number on the screen to the location on the green corresponding to that zone number. In this example, Fig. 6 shows what the Edit screen would look like in a hypothetical situation after the user drags and drops the zones to their proper hypothetical location on the green. As compared to Fig. 5, the location of numbers 1-4 in Fig. 6 have changed location.

Due to the fact that the displayed depiction is geo-referenced to the course map, once the one or more zone numbers are dragged and dropped at its proper location, that zone is geo-referenced to the course maps. Once all the zones on the desired holes are selected, the superintendent then uploads the information to the central information processing site and database, such as the course map supplier's server, through, for example, the internet, a wireless connection or other known communications portal. As a result, the zone locations become a part of each course map and available for use in the normal manner with the location aware device onto which the course and pin locations have been downloaded using the internet, wireless connection or other communication portal.

The pin locations program residing on the location aware device would include a settings option for each course in which the zones selected for play on the day of the golfer's round can be selected at the beginning of the round. For instance, if on a particular day the pins are placed in zone 3, before his round the golfer would adjust the "zone setting" to zone 3. Thereafter, as the golfer plays his round, he can obtain distances to zone 3 on each hole, just as he would other course features on the course map.

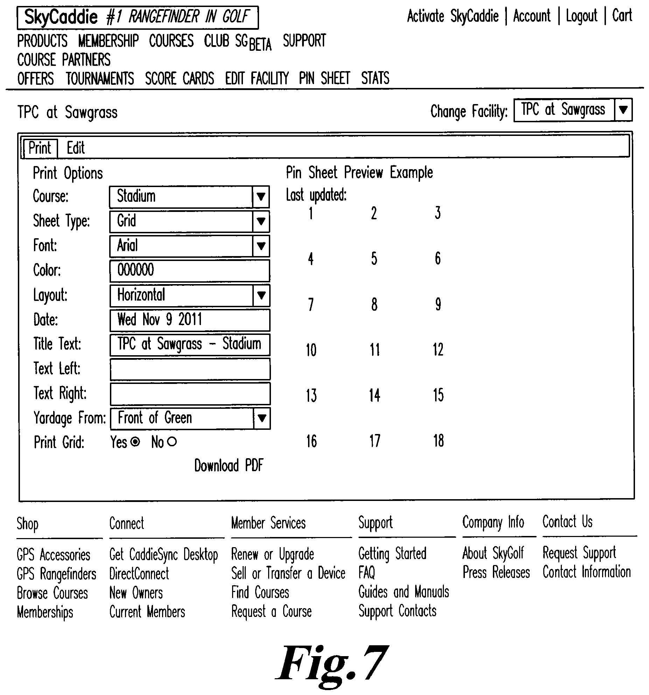

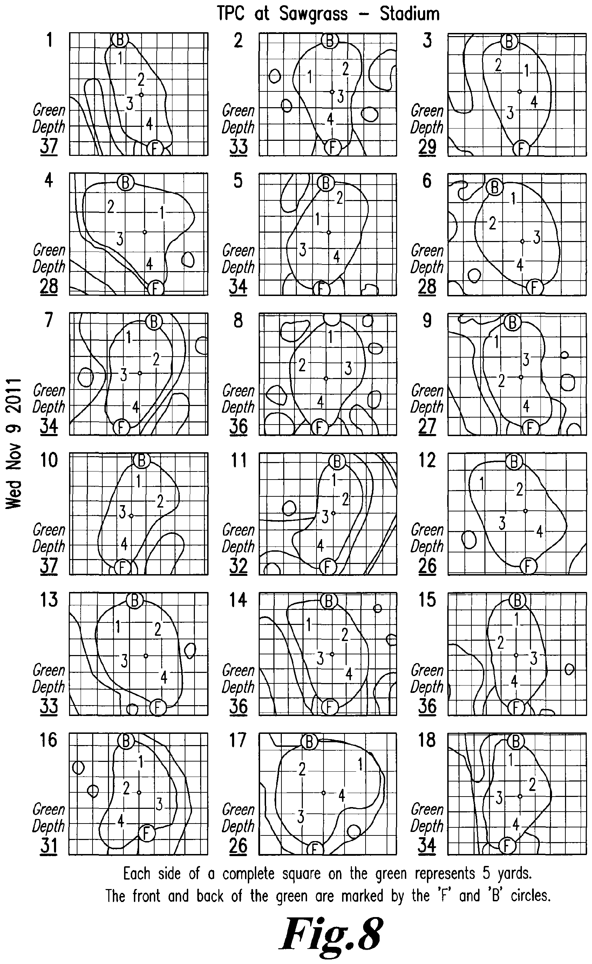

In a nonlimiting example, the PinPoint program could also provide a print function, where the superintendent can print pin sheets for each day, round, etc., as best shown in Fig. 7. The print screen can include a number of options on the right side, including whether to print a zone pin sheet, a grid pin sheet or a pin sheet showing paces from front and side, which is referred to as a pin sheet. Figure 8 is a printed pin sheet showing zones. There are numerous advantages to allowing pin sheets to be thus printed. For instance, the course can immediately print a pin sheet when needed, and does not have to have a large number professionally printed before use. Pin sheets can be changed daily or with regularity and pin sheets can include rotating information and/or advertising.

In one or more examples of the invention using Grid mode, the process is as set forth above with respect to zones, except instead of zones supplied by the golf course, a grid system is used as best shown in Fig. 3. The grid pattern is automatically overlaid on the green, creating a number of squares over the green. The dimensions of the grid pattern can be varied in distance. In an example, the grid pattern creates a square 5 yards by 5 yards. However, any dimension of the grid size in yards or meters is within the scope of the present invention. In use, the superintendent would simply click on the grid square that approximates the pin location. Similar to as discussed above with respect to zone mode, in the present example of grid mode, since the screen display of the green is geo-referenced to the course maps, once the location of the pin, i.e., the corresponding grid square, is selected, that location is automatically geo-referenced to the course maps. Once a pin location (i.e., the corresponding grid square) is selected for the desired holes, for example all or less than all of the holes, the superintendent uploads the information to the central information processing site and database, or again the course map supplier's server, where it becomes a part of each course map and available for use with the location aware device onto which the course and pin locations are downloaded and as described above for zone mode.

In one or more examples of the invention using pin mode, the process is similar to that described above for zone mode and grid mode, except that the pin is located by reference to the number of yards or paces the pin is from the front of the green and the side of the green. In an example, the side of the green closest to the pin is used as the side for which to display the number of paces, but any desirable side can be used. In further examples, other intersections of the green could also be used, such as the front portion of the green perpendicular to the pin location rather than the geographic center front of the green. Additionally, more than two distances could be used, such as, for example, yards or paces on, which could represent the geographic center, front, left and right.

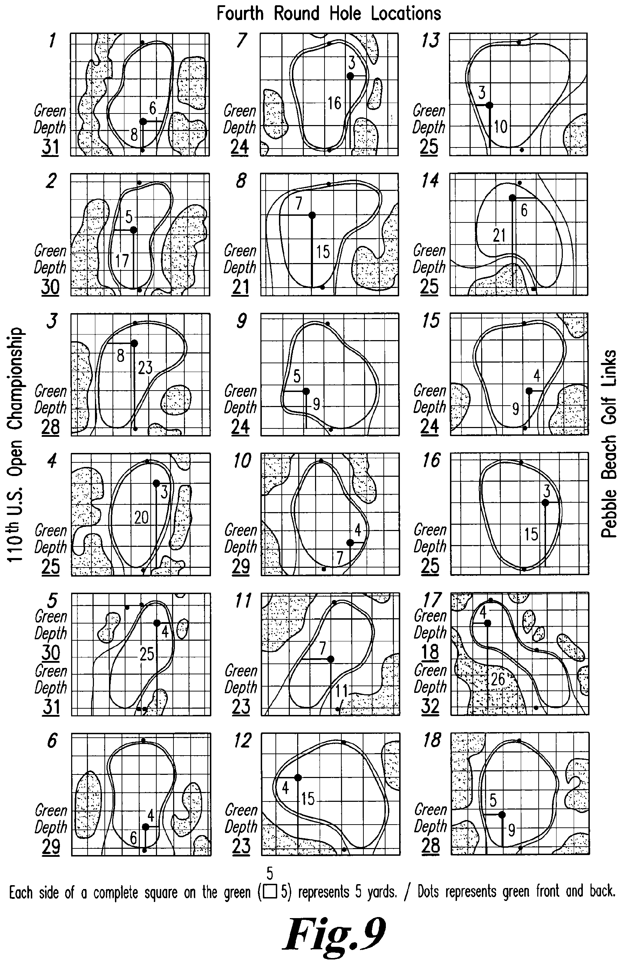

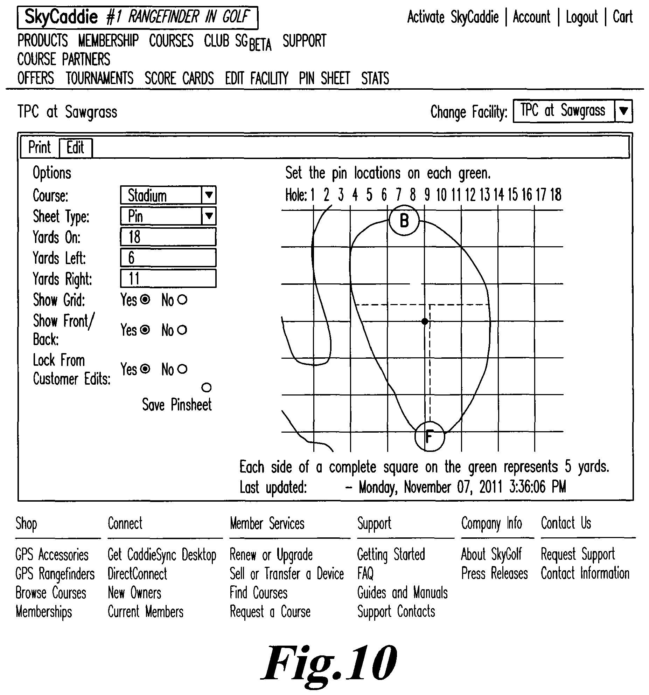

The information discussed above for pin mode can be obtained and entered in several ways. In one example, the golf course would already have in its possession or would create written pin sheets, such as that depicted in Fig. 9, in which the pin on each green is located by the number of yards or paces from the front of the green and from one of the sides of the green, for example the closest side. On the Edit screen shown in Fig. 4, the superintendent would manually enter the distance information in the Yards On, Yards Left and/or Yards Right boxes, as applicable, on the left side of the screen under Options. The distance information entered would be the distances matching the pre-printed written pin sheet. For example, Fig. 10 depicts the 3^{rd} hole of the TPC at Sawgrass Stadium course in which the pin is located 18 yards on, 6 yards left and 11 yards right. While Fig. 10 depicts the number of yards left and right the pin is located, in practice it is not necessary to include both. Either left or right distances or both left and right distances could be entered. Similar to the other exemplary modes, since the screen display is geo-referenced to the course map, the entered information for each pin on each hole would be automatically geo-referenced to course maps. Once the pin information is entered for all holes in which information is desired to be entered, the superintendent would upload the information to the central information processing site and database, where it becomes a part of each course map and available for use with the location aware device onto which the course and pin locations are downloaded and as described above for zone mode and grid mode.

In a further example of the invention, another way this information could be entered is for the superintendent to simply drag and drop the pin on the green display on the edit screen, rather than manually entering the information in the Yards On, Yards Left and/or Yards Right boxes under the Options section of the screen. As the pin is dragged on the green display with the computer or device mouse, the numbers in the Option boxes are automatically moved accordingly. When all pin information is entered, the information is uploaded to the central information processing site and database similarly as above described.

In a further example of the invention, information can be entered without reference to a pre-printed pin sheet. In that case, the superintendent would simply note the distance on, left and/or right the pin is located on each hole, and then enter the information by manually entering the location information in the boxes under the Options section of the Edit screen or dragging and dropping the pin icon on the Edit screen green display. When all pin information is entered, the information is uploaded to the central information processing site and database for use with the location aware device onto which the course and pin locations are downloaded as above described.

As discussed with respect to one or more embodiments above, if the golfer is using pin locations provided through PinPoint, before playing his round of golf, the golfer would download or update the course map for the golf course at which he intends to play. This could include either downloading the entire course map or downloading only the updated data, such as the new pin locations. The downloading could be done before the golfer arrives at the course, such as through a WiFi or other internet connection at his home or office, or once he arrives at the course, such as through a WiFi or other internet connection at the course. The course map update would include the pin locations for the day which have previously been entered and uploaded to the central information processing site and database as described above.

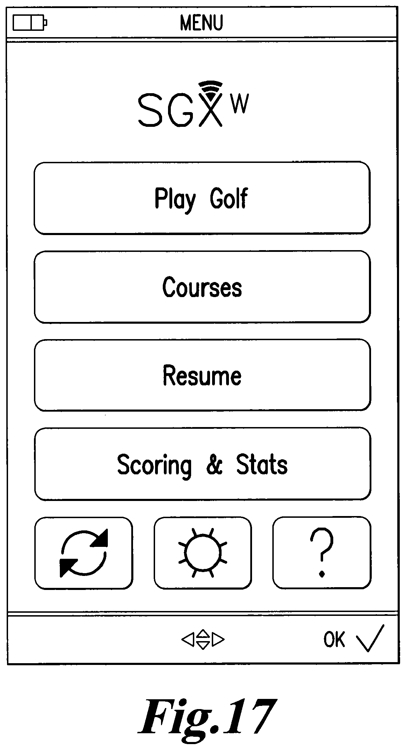

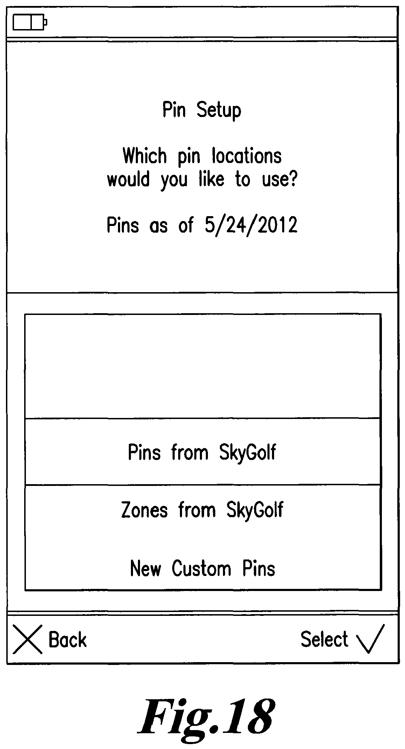

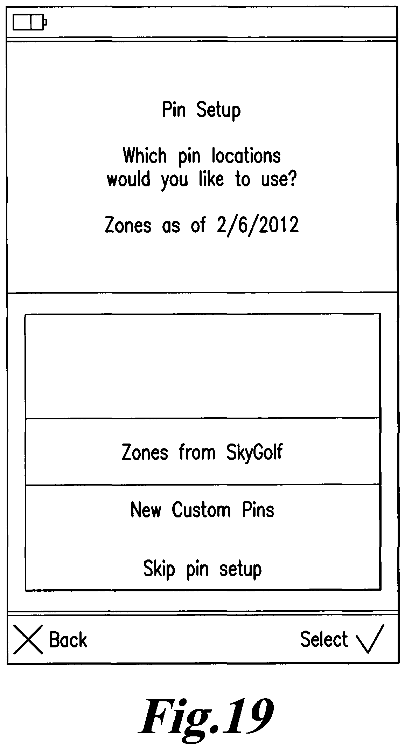

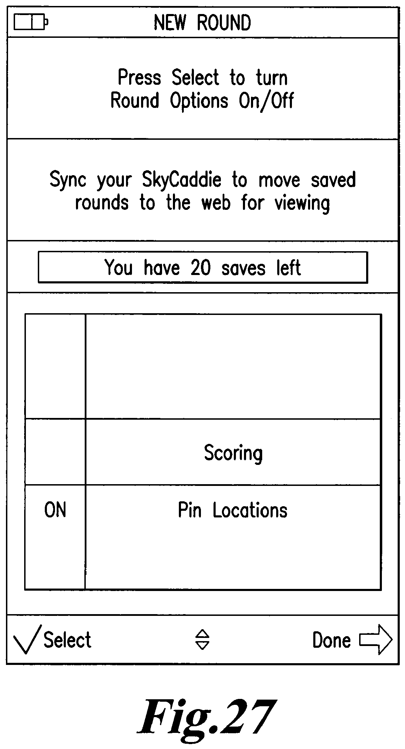

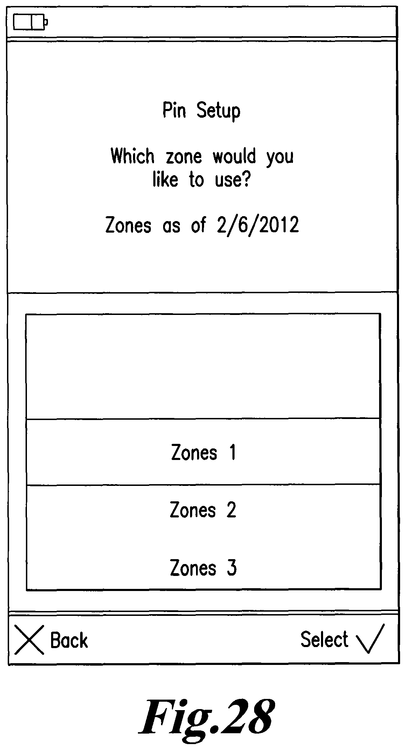

In an alternative exemplary embodiment, the golfer could enter the pin locations himself, using a custom pins setting as described hereinafter. In a nonlimiting example, once the course is updated on his location aware device and the golfer is ready to play golf, the golfer turns on his location aware device, and the main menu appears on the device screen, as shown in Figure 17. After activating the Courses setting, the golfer selects the golf course he wants to play. Once the golf course is selected, the Round Options menu is displayed as shown in Fig. 27, and the golfer selects his round options, including for example whether he wants to use Pin Locations. If the golfer turns on Pin Locations, the golfer is taken to the Pin Setup menu, shown in Fig. 18 for instance. At the Pin Setup menu, if the golfer wants to use pin locations provided through the central information processing site and database, the golfer selects whether he wants to use Pin Mode or Zone (or Grid) Mode, as shown in Figs. 18 and 19. Figs. 18 and 19 show a course in which grid mode is not available and, therefore they do not depict a selection for grid mode. If the course has grid mode available, an option for grid mode would also be included. If the golfer selects zone or grid mode, the device will toggle to the zone or grid selection screen, where the golfer will select which zone or grid to use. Figure 28 shows an example where zone mode is used and zone 1 has been selected.

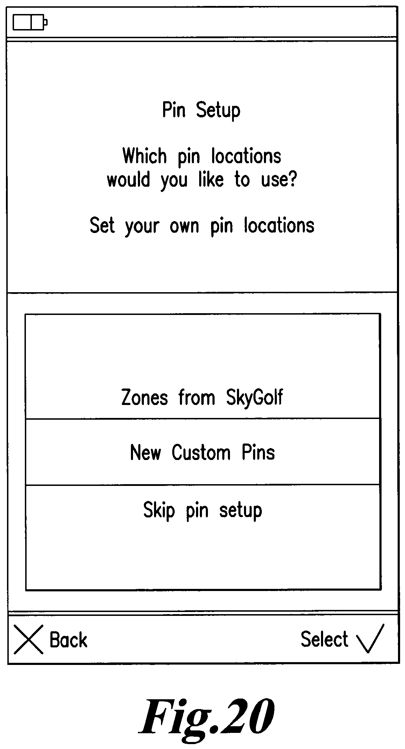

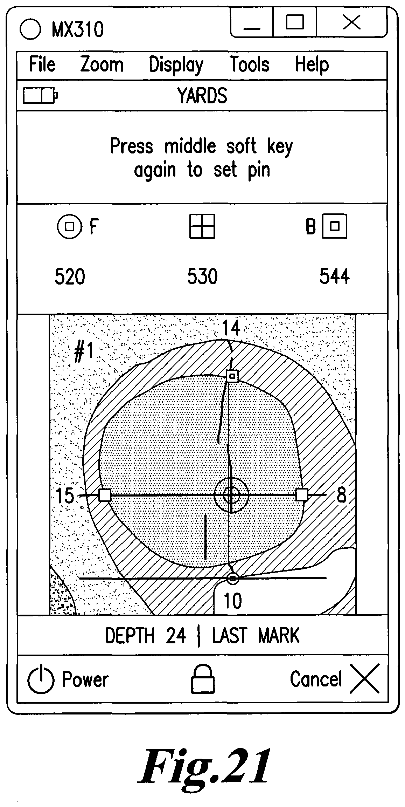

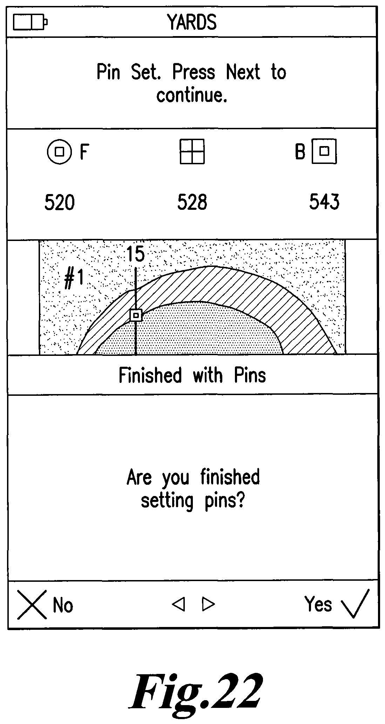

In a nonlimiting example, if the golfer wants to set the pin locations himself, he would select the New Custom Pins selection on the Pin Setup screen, as shown in Figure 20. If the golfer elects to set custom pin locations, a display of each golf green would sequentially appear, where the golfer is able to select the pin location. Figure 21 is an example of a green in which the golfer can set a custom pin location. In a nonlimiting example, the golfer would move the device cursor to the location at which the golfer wants to set the pin location and press one of the buttons on the device to "set" the location. As the user moves the curser, the number displayed on the screen to the front, middle, back, and/or side(s) can also move accordingly. Once the location of the pin is set for that hole, the device toggles forward to the next hole green, where the process is repeated until the pin location is set for each green for which a selection is desired. After the golfer has selected each pin location, the device will prompt the golfer to declare if he is finished setting pin locations, as shown in Figure 22.

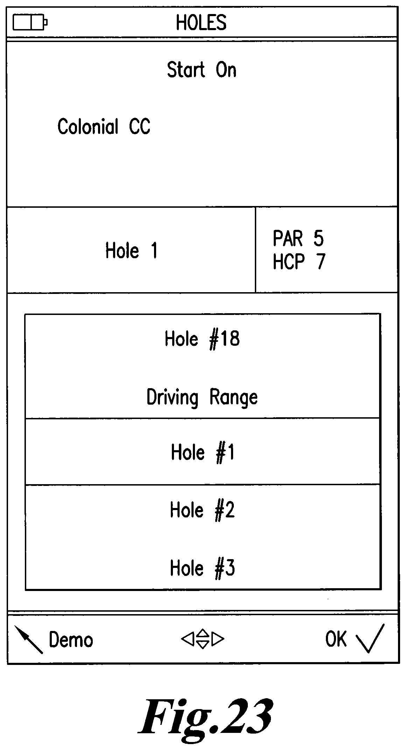

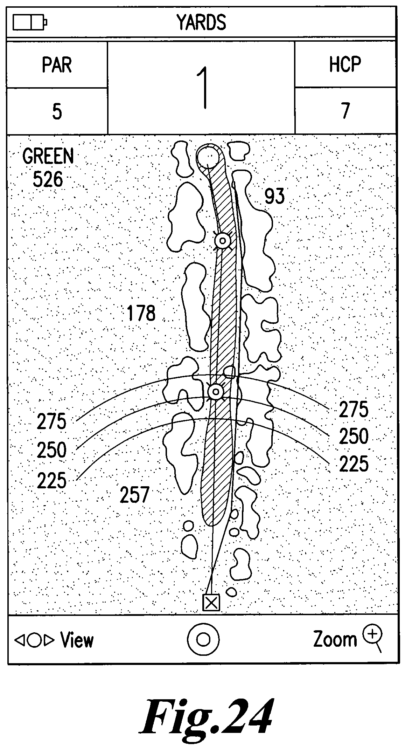

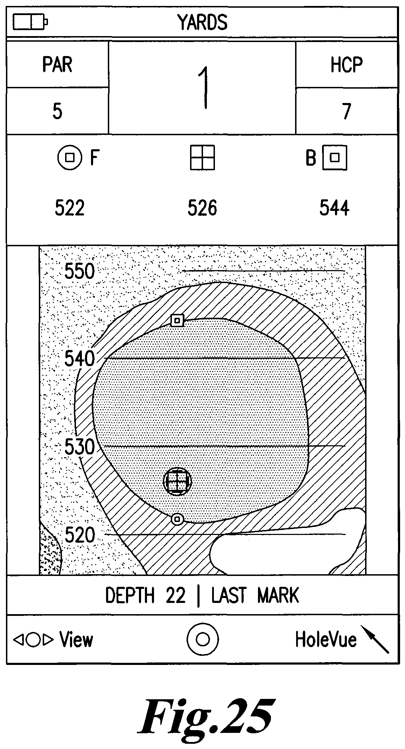

Once the pin setting process is finished, whether pin locations have been provided through the central information processing site and database or custom locations made by the golfer, the location aware device asks the golfer which hole he wants to start on, as shown in Figure 23. Once the starting hole selection is made, the device displays that hole with the set pin locations. For instance, if the golfer starts on hole 1, as selected in Figure 23, and stands on the hole 1 tee, the device might then display the entire hole representation, as shown in Figure 24. The pin location depicted on the hole representation would be the selected pin location, and distances would be measured from the location aware device to the pin location. If desired, the golfer can toggle to a green only view, such as shown in Figure 25, in which case the pin location is depicted by the circle icon on the green and distances can be given from the golfer, for example holding the location aware device, to the front of the green, the selected pin location and the back of the green. In an example when zone or grid mode is selected, the pin location would be depicted as being within the zone or grid selected, generally at the center of the zone or grid. Play then proceeds in like manner from hole to hole.

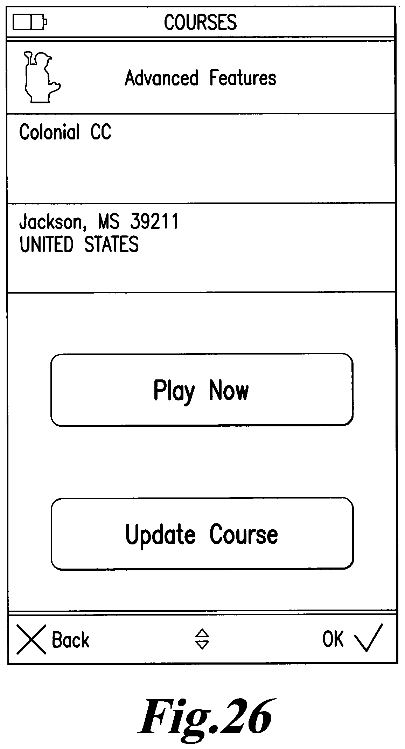

As shown in Fig. 26, once the golfer is ready to play, a Play Now button is displayed allowing the user to select and then proceed with use of the location aware device during the round of golf. Further, as shown in Fig. 27, the user has an option to view the scoring for the round of golf as well as the option for the Pin Location setting to be on or off.

One or more embodiments discussed above describe a system and method in which the golf course superintendent or other worker enters the pin location information. In one or more further examples, the pin location information can be entered by others, including the golfer, using the same or similar methods. In a nonlimiting example, the golfer could either be given access to the same or similar computer program as a course superintendent or the information could be entered directly into his location aware device, using the course map made available to the golfer through download over the internet, using a wireless connection or other communication portal. The program could be modified to accommodate the location aware device capabilities, but the underlying principles would be the same as is the case for superintendent entered information.

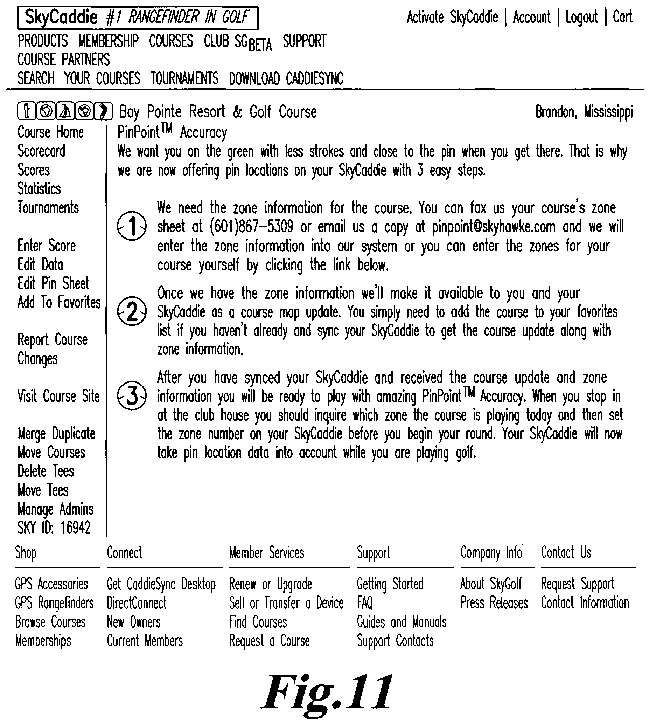

Figure 11 is an example of a computer screen display in which the information for the zone mode, for example, is used and is provided by the golfer in which the golfer either supplies a zone pin sheet to the course map supplier to enter the data in the central information processing site and database or the golfer enters the information himself or herself through an internet connected computer.

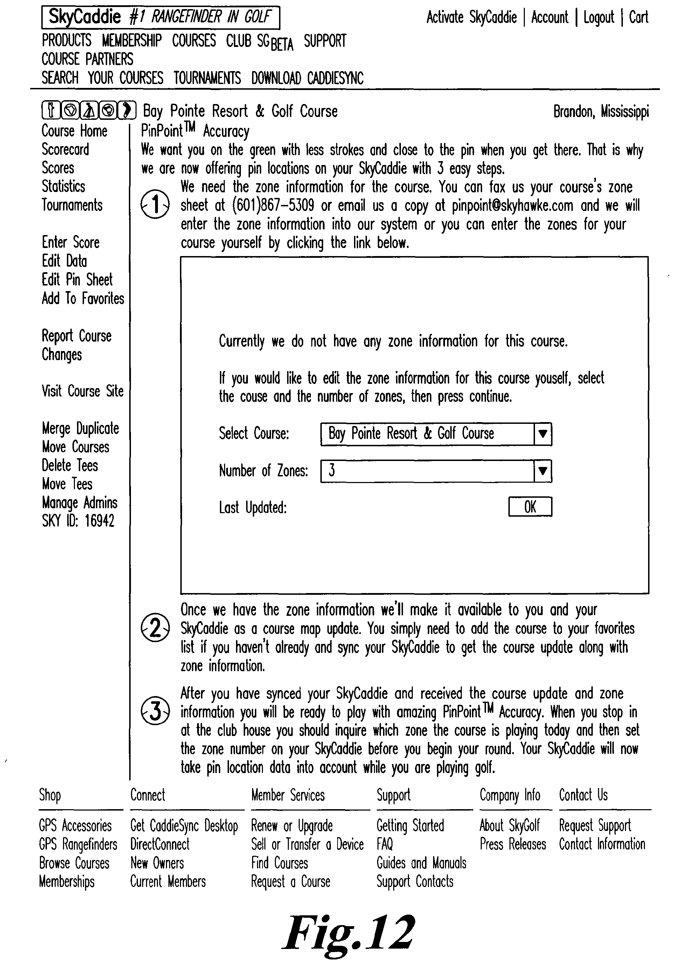

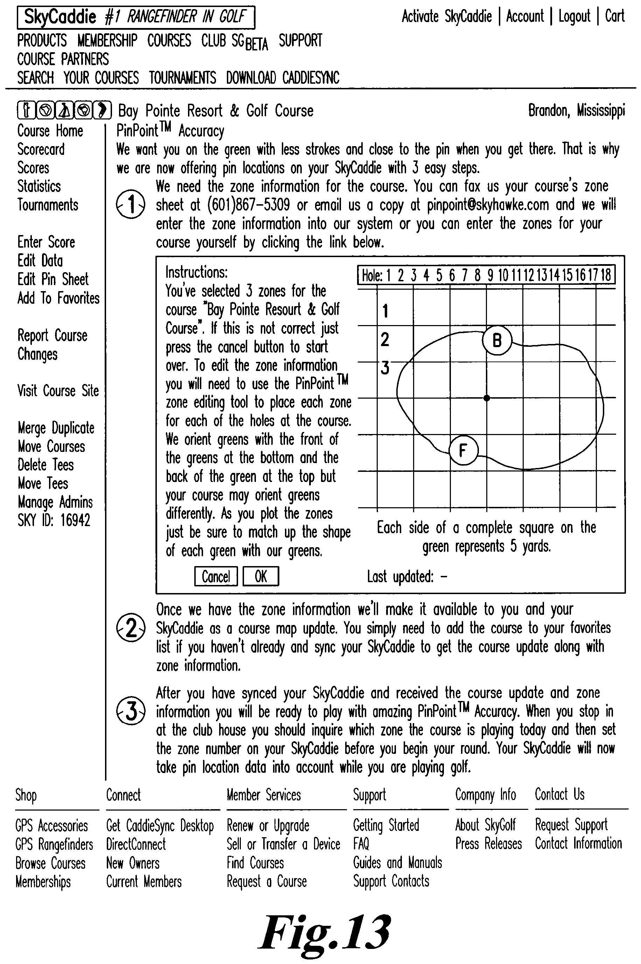

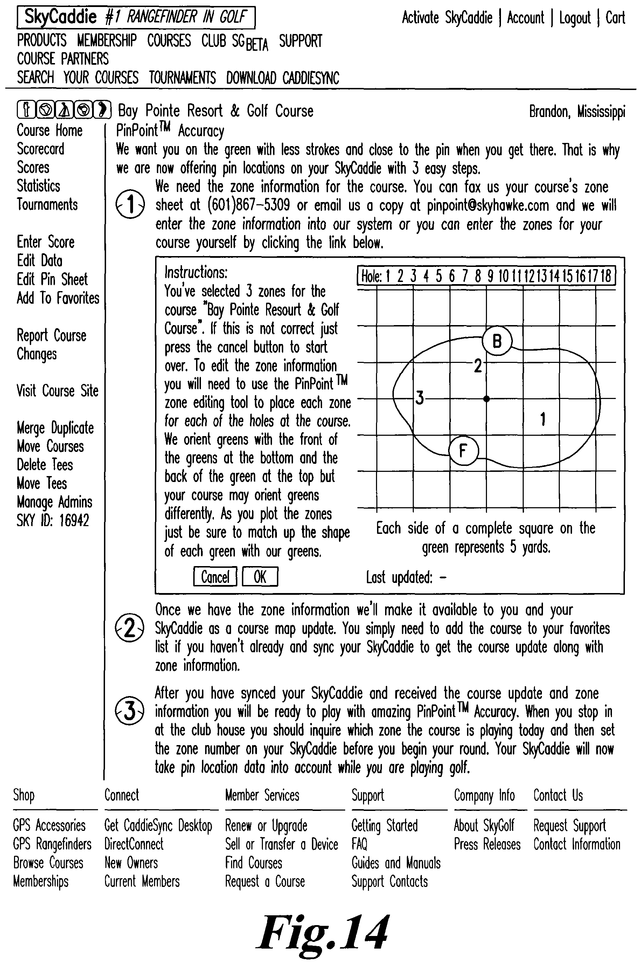

Figures 11-14 depict an example where the member enters the data for Bay Pointe Resort and Golf Course. In Fig. 11 of the present example, the user could click on the "I want to enter the zones myself' link. After clicking the link, the member is shown the screen depicted in Figure 12. At this time, the member can select the course to be played and number of zones, and then clicks "continue." In this example, 3 zones are selected but as discussed above, it should be appreciated that any number of zones can be selected. The golfer is then directed to the screen depicted in Figure 13, and in the manner described above with respect to other embodiments, drags and drops the zone numbers 1-3 to the appropriate location on the green screen display. Figure 14 depicts a hypothetical zone location for hole 1 at Bay Point, after the numbers are dragged and dropped into place. Once all zones are thus selected, this information is uploaded for use and in the manner as described previously with respect to other embodiments of the invention.

In the embodiment discussed with respect to Figs. 11-14, the member employs the zone mode on a computer program resident on a computer with an internet, wireless or other access. It should be appreciated that this method and process can performed on the location aware device and/or using the zone, grid, pin or other modes and any means of communicating with the server containing the course map.

While exemplary embodiments of the invention have been described in conjunction with the embodiments outlined above, it is evident that many alternatives, modifications and variations will be apparent to those skilled in the art. Accordingly, exemplary embodiments of the invention, as set forth above, are intended to be illustrative, not limiting. Various changes may be made without departing from the scope of the invention.

## Claims

1. A method of storing and communicating topographical information to and from devices by means of an accessible network, the topographical information being the location of a pin on a green of a hole on a golf course, the method comprising:
a user selecting on a display screen, one or more greens of a plurality of greens of the golf course, for setting a pin position on the green;
the user selecting a plurality of zones to be placed on a graphical representation of the one or more selected greens;
the user inputting a position of the pin on one or more of the plurality of greens;
geo-referencing the pin location information represented by each zone to a digitized golf course map;
storing the position of the pin on each of the one or more greens;
uploading the position of the pin on each of the one or more greens to a central information processing site and database; and
making available the locations of the one or more geo-referenced pins to a location aware device (100) for determining a distance from the location aware device (100) to the one or more pins.

2. The method of Claim 1, further comprising the user dragging and dropping each zone onto the graphical representation of the one or more greens.

3. The method of Claim 2, wherein the storing the position of the pin represented by each zone on each of the one or more greens, includes uploading the pin position information to the central information processing site and database to be stored.

4. The method of Claim 3, wherein the information is uploaded through the internet, a wireless connection, or other conventional communications protocol.

5. The method of Claim 1, wherein a graphical representation on the display screen of the one or more greens includes a grid system having grid squares overlaid on each of the one or more greens.

6. The method of Claim 5, wherein the user inputting the position of the pin includes the user selecting one of the grid squares that approximates the actual pin location.

7. The method of Claim 6, further comprising the user inputting the pin position for each of eighteen holes for a golf course.

8. The method of Claim 6, wherein the storing the position of the pin on each of the one or more greens includes uploading the pin position information to the central information processing site and database to be stored.

9. The method of Claim 8, wherein the information is uploaded through the internet, a wireless connection, other conventional communications protocol.

10. The method of Claim 1, wherein the user inputting the position of the pin on one or more of the greens includes the user entering a distance of the pin with respect to at least one of a front of the green, a back of the green, a left side of the green, and a right side of the green.

11. The method of Claim 1, wherein the display screen is provided with the location aware device (100).

12. The method of Claim 1, wherein the pin location information is entered into a computer program.

13. A system of storing and communicating topographical information to and from devices by means of an accessible network, the topographical information being the location of a pin on a green of a hole on a golf course, comprising:
an information processing and viewing device, including
a processor or microprocessor that interprets and executes instructions;
a memory capable of storing a digitized golf course map and computer software program instructions;
an input interface that permits a user to select one or more greens of a plurality of greens of the golf course, for setting a pin position on the green, to select a plurality of zones to be placed on a graphical representation of the one or more selected greens, and to input a location of the pin on one or more of the plurality of greens that include the zones;
a display for displaying a computer software program interface, course information and green representations; and
a communications interface for communicating information from the information processing and viewing device to a central information processing site and database;
a digitized golf course map that includes a digitized map of at least one green on a hole of a golf course that includes the zones;
a computer software program installed on the information processing and viewing device that receives an input from the user that corresponds to the pin location and which geo-references the pin location represented by each zone with a corresponding location on the digitized course map;
a network through which the information processing and viewing device communicates with the central information processing site and database and the central information processing site and database communicates with a location aware device (100);
the central information processing site and database, including
a communications interface capable of receiving the pin location from the information processing and viewing device;
a processor or microprocessor capable of processing the pin location received from the information processing and viewing device to incorporate such pin location into the course map that includes the green on which the pin is located;
a memory capable of storing the pin location; and
a communications interface capable of transmitting the pin location and course map to the location aware device (100) and other client devices; and
the location aware device, including
a communications interface (141, 145, 170, 175) capable of receiving from the central information processing site and database the digitized course map and the pin location;
a memory (115, 110) capable of storing the digitized course map, including the pin location;
a position module (120) with an antenna receiving location data;
a processor or microprocessor (105), responsive to the position module (120), from which the location of the location aware device (100) on the golf course and the distance from the location aware device (100) to the pin location can be determined; and
a display (125) to display the distance from the location aware device (100) to the pin location.

## Patentansprüche

1. Verfahren zum Speichern und Übermitteln topografischer Informationen zu und von Vorrichtungen mittels eines Zugangsnetzwerks, wobei die topografischen Informationen der Standort eines Pins auf einem Grün eines Lochs auf einem Golfplatz sind, wobei das Verfahren Folgendes umfasst:
ein Nutzer wählt auf einem Anzeigeschirm ein oder mehrere Grüns unter einer Vielzahl von Grüns des Golfplatzes aus, um eine Pinposition auf dem Grün zu setzen;
der Nutzer wählt eine Vielzahl von Zonen aus, die auf einer grafischen Darstellung des einen oder der mehreren ausgewählten Grüns anzuordnen sind;
der Nutzer gibt eine Position des Pins auf einem oder mehreren der Vielzahl von Grüns ein;
Georeferenzieren der Pin-Standort-Informationen, die durch jede Zone repräsentiert werden, zu einer digitalisierten Golfplatzkarte;
Speichern der Position des Pins auf jedem des einen oder der mehreren Grüns;
Hochladen der Position des Pins auf jedem des einen oder der mehreren Grüns zu einem zentralen Informationsverarbeitungsstandort und einer Datenbank; und
Verfügbarmachen der Standorte des einen oder der mehreren georeferenzierten Pins an eine standorterkennende Vorrichtung (100) zum Bestimmen einer Entfernung von der standorterkennenden Vorrichtung (100) zu dem einen oder den mehreren Pins.

2. Verfahren nach Anspruch 1, das weiter umfasst, dass der Nutzer jede Zone per Drag & Drop auf die grafische Darstellung des einen oder der mehreren Grüns zieht.

3. Verfahren nach Anspruch 2, wobei das Speichern der Position des Pins, der durch jede Zone auf jedem des einen oder der mehreren Grüns repräsentiert wird, das Hochladen der Pinpositionsinformationen zu dem zentralen Informationsverarbeitungsstandort und der Datenbank zum Zweck des Speicherns enthält.

4. Verfahren nach Anspruch 3, wobei die Informationen über das Internet, eine Drahtlosverbindung oder ein sonstiges herkömmliches Kommunikationsprotokoll hochgeladen werden.

5. Verfahren nach Anspruch 1, wobei eine grafische Darstellung auf dem Anzeigeschirm des einen oder der mehreren Grüns ein Gitternetzsystem enthält, das Gitternetzquadrate hat, die über jedes des einen oder der mehreren Grüns gelegt sind.

6. Verfahren nach Anspruch 5, wobei das Eingeben der Position des Pins durch den Nutzer enthält, dass der Nutzer eines der Gitternetzquadrate auswählt, das dem Ist-Standort des Pins angenähert ist.

7. Verfahren nach Anspruch 6, das weiter umfasst, dass der Nutzer die Pinposition für jedes von achtzehn Löchern für einen Golfplatz eingibt.

8. Verfahren nach Anspruch 6, wobei das Speichern der Position des Pins auf jedem des einen oder der mehreren Grüns das Hochladen der Pinpositionsinformationen zu dem zentralen Informationsverarbeitungsstandort und der Datenbank zum Zweck des Speicherns enthält.

9. Verfahren nach Anspruch 8, wobei die Informationen über das Internet, eine Drahtlosverbindung oder ein sonstiges herkömmliches Kommunikationsprotokoll hochgeladen werden.

10. Verfahren nach Anspruch 1, wobei das Eingeben der Position des Pins auf einem oder mehreren der Grüns durch den Nutzer enthält, dass der Nutzer eine Entfernung des Pins mit Bezug auf mindestens eines von einer Vorderseite des Grüns, einer Rückseite des Grüns, einer linken Seite des Grüns und einer rechten Seite des Grüns eingibt.

11. Verfahren nach Anspruch 1, wobei der Anzeigeschirm mit der standorterkennenden Vorrichtung (100) ausgestattet ist.

12. Verfahren nach Anspruch 1, wobei die Pin-Standort-Informationen in ein Computerprogramm eingegeben werden.

13. System zum Speichern und Übermitteln topografischer Informationen zu und von Vorrichtungen mittels eines Zugangsnetzwerks, wobei die topografischen Informationen der Standort eines Pins auf einem Grün eines Lochs auf einem Golfplatz sind, das Folgendes umfasst:
eine Informationsverarbeitungs- und -betrachtungsvorrichtung, die Folgendes enthält:
einen Prozessor oder Mikroprozessor, der Instruktionen interpretiert und ausführt;
einen Speicher, der in der Lage ist, eine digitalisierte Golfplatzkarte und Computersoftwareprogramminstruktionen zu speichern;
eine Eingabeschnittstelle, die es einem Nutzer erlaubt, ein oder mehrere Grüns unter einer Vielzahl von Grüns des Golfplatzes auszuwählen, um eine Pinposition auf dem Grün zu setzen, eine Vielzahl von Zonen auszuwählen, die auf einer grafischen Darstellung des einen oder der mehreren ausgewählten Grüns zu platzieren sind, und einen Standort des Pins auf einem oder mehreren der Vielzahl von Grüns, welche die Zonen enthalten, einzugeben;
eine Anzeige zum Anzeigen einer Computersoftwareprogrammschnittstelle, Platzinformationen und Grün-Darstellungen; und
eine Kommunikationsschnittstelle zum Übermitteln von Informationen von der Informationsverarbeitungs- und -betrachtungsvorrichtung zu einem zentralen Informationsverarbeitungsstandort und einer Datenbank;
eine digitalisierte Golfplatzkarte, die eine digitalisierte Karte von mindestens einem Grün an einem Loch eines Golfplatzes enthält, die die Zonen enthält;
ein Computersoftwareprogramm, das in der Informationsverarbeitungs- und - betrachtungsvorrichtung installiert ist und das eine Eingabe von dem Nutzer empfängt, die dem Pin-Standort entspricht, und das den Pin-Standort, der durch jede Zone repräsentiert wird, mit einem entsprechenden Standort auf der digitalisierten Platzkarte georeferenziert;
ein Netzwerk, durch das die Informationsverarbeitungs- undbetrachtungsvorrichtung mit dem zentralen Informationsverarbeitungsstandort und der Datenbank kommuniziert und der zentrale Informationsverarbeitungsstandort und die Datenbank mit einer standorterkennenden Vorrichtung (100) kommuniziert;
wobei der zentrale Informationsverarbeitungsstandort und die Datenbank Folgendes enthalten:
eine Kommunikationsschnittstelle, die in der Lage ist, den Pin-Standort von der Informationsverarbeitungs- und -betrachtungsvorrichtung zu empfangen;
einen Prozessor oder Mikroprozessor, der in der Lage ist, den Pin-Standort, der von der Informationsverarbeitungs- und -betrachtungsvorrichtung empfangen wird, zu verarbeiten, um den Pin-Standort in die Platzkarte einzuarbeiten, die das Grün enthält, auf dem sich der Pin befindet;
einen Speicher, der in der Lage ist, den Pin-Standort zu speichern; und
eine Kommunikationsschnittstelle, die in der Lage ist, den Pin-Standort und die Platzkarte zu der standorterkennenden Vorrichtung (100) und zu anderen Client-Vorrichtungen zu übertragen; und
die standorterkennende Vorrichtung Folgendes enthält:
eine Kommunikationsschnittstelle (141, 145, 170, 175), die in der Lage ist, von dem zentralen Informationsverarbeitungsstandort und der Datenbank die digitalisierte Platzkarte und den Pin-Standort zu empfangen;
einen Speicher (115, 110), der in der Lage ist, die digitalisierte Platzkarte, die den Pin-Standort enthält, zu speichern;
ein Positionsmodul (120) mit einer Antenne, das Standortdaten empfängt;
einen Prozessor oder Mikroprozessor (105), der auf das Positionsmodul (120) anspricht, anhand dessen der Standort der standorterkennenden Vorrichtung (100) auf dem Golfplatz und die Entfernung von der standorterkennenden Vorrichtung (100) zu dem Pin-Standort bestimmt werden können; und
eine Anzeige (125) zum Anzeigen der Entfernung von der standorterkennenden Vorrichtung (100) zu dem Pin-Standort

## Revendications

1. Procédé de stockage et de communication d'informations topographiques vers et à partir de dispositifs au moyen d'un réseau accessible, les informations topographiques étant l'emplacement d'un drapeau sur un green d'un trou sur un parcours de golf, le procédé comprenant :
la sélection par un utilisateur, sur un écran d'affichage, d'un ou plusieurs greens d'une pluralité de greens du parcours de golf, pour régler une position de drapeau sur le green ;
la sélection par l'utilisateur d'une pluralité de zones à placer sur une représentation graphique des un ou plusieurs greens sélectionnés ;
la saisie par l'utilisateur d'une position du drapeau sur un ou plusieurs de la pluralité de greens ;
la géolocalisation des informations de position de drapeau représentées par chaque zone pour une carte de parcours de golf numérisée ;
le stockage de la position du drapeau sur chacun des un ou plusieurs greens ;
le téléchargement de la position du drapeau sur chacun des un ou plusieurs greens vers un site centralisé de traitement d'informations et une base de données ; et
la mise à disposition des positions des un ou plusieurs drapeaux géolocalisés pour un dispositif d'information de localisation (100) pour déterminer une distance du dispositif d'information de localisation (100) aux un ou plusieurs drapeaux.

2. Procédé selon la revendication 1, comprenant en outre le glisser-déposer par l'utilisateur de chaque zone sur la représentation graphique des un ou plusieurs greens.

3. Procédé selon la revendication 2, dans lequel le stockage de la position du drapeau représentée par chaque zone sur chacun des un ou plusieurs greens inclut le téléchargement des informations de position de drapeau vers le site centralisé de traitement d'informations et la base de données pour y être stockées.

4. Procédé selon la revendication 3, dans lequel les informations sont téléchargées par le biais d'Internet, d'une connexion sans fil ou d'un autre protocole de communication conventionnel.

5. Procédé selon la revendication 1, dans lequel une représentation graphique sur l'écran d'affichage des un ou plusieurs greens inclut un système de grille ayant des cases de grille superposées sur chacun des un ou plusieurs greens.

6. Procédé selon la revendication 5, dans lequel la saisie par l'utilisateur de la position du drapeau inclut la sélection par l'utilisateur d'une des cases de grille qui s'approche de la position réelle du drapeau.

7. Procédé selon la revendication 6, comprenant en outre la saisie par l'utilisateur de la position de drapeau pour chacun des dix-huit trous d'un parcours de golf.

8. Procédé selon la revendication 6, dans lequel le stockage de la position du drapeau sur chacun des un ou plusieurs greens inclut le téléchargement des informations de position de drapeau vers le site centralisé de traitement d'informations et la base de données pour y être stockées.

9. Procédé selon la revendication 8, dans lequel les informations sont téléchargées par le biais d'Internet, d'une connexion sans fil ou d'un autre protocole de communication conventionnel.

10. Procédé selon la revendication 1, dans lequel la saisie par l'utilisateur de la position du drapeau sur un ou plusieurs des greens inclut l'entrée par l'utilisateur d'une distance du drapeau par rapport à au moins un parmi une partie avant du green, une partie arrière du green, un côté gauche du green et un côté droit du green.

11. Procédé selon la revendication 1, dans lequel l'écran d'affichage est muni du dispositif d'information de localisation (100).

12. Procédé selon la revendication 1, dans lequel les informations de localisation de drapeau sont entrées dans un programme informatique.

13. Système de stockage et de communication d'informations topographiques vers et à partir de dispositifs au moyen d'un réseau accessible, les informations topographiques étant l'emplacement d'un drapeau sur un green d'un trou sur un parcours de golf, comprenant :
un dispositif de traitement et de visualisation d'informations, incluant
un processeur ou un microprocesseur qui interprète et exécute des instructions ;
une mémoire capable de stocker une carte de parcours de golf numérisée et des instructions de programme logiciel informatique ;
une interface de saisie qui permet à un utilisateur de sélectionner un ou plusieurs greens d'une pluralité de greens du parcours de golf, pour régler une position de drapeau sur le green, pour sélectionner une pluralité de zones à placer sur une représentation graphique des un ou plusieurs greens sélectionnés, et pour saisir un emplacement du drapeau sur un ou plusieurs de la pluralité de greens qui incluent les zones ;
un dispositif d'affichage pour afficher une interface de programme logiciel informatique, des informations de parcours et des représentations de greens ; et
une interface de communication pour communiquer des informations du dispositif de traitement et de visualisation d'informations à un site centralisé de traitement d'informations et une base de données ;
une carte de parcours de golf numérisée qui inclut une carte numérisée d'au moins un green sur un trou d'un parcours de golf qui inclut les zones ;
un programme logiciel informatique installé sur le dispositif de traitement et de visualisation d'informations qui reçoit une saisie provenant de l'utilisateur qui correspond à l'emplacement de drapeau et qui géolocalise l'emplacement de drapeau représenté par chaque zone avec un emplacement correspondant sur la carte de parcours numérisée ;
un réseau à travers lequel le dispositif de traitement et de visualisation d'informations communique avec le site centralisé de traitement d'informations et la base de données et le site centralisé de traitement d'informations et la base de données communiquent avec un dispositif d'information de localisation (100) ;
le site centralisé de traitement d'informations et la base de données incluant
une interface de communication capable de recevoir l'emplacement de drapeau à partir du dispositif de traitement et de visualisation d'informations ;
un processeur ou un microprocesseur capable de traiter l'emplacement de drapeau reçu à partir du dispositif de traitement et de visualisation d'informations pour incorporer cet emplacement de drapeau dans la carte de parcours qui inclut le green sur lequel le drapeau est situé ;
une mémoire capable de stocker l'emplacement de drapeau ; et
une interface de communication capable de transmettre l'emplacement de drapeau et la carte de parcours au dispositif d'information de localisation (100) et d'autres dispositifs clients ; et
le dispositif d'information de localisation incluant
une interface de communication (141, 145, 170, 175) capable de recevoir à partir du site centralisé de traitement d'informations et de la base de données la carte de parcours numérisée et l'emplacement de drapeau ;
une mémoire (115, 110) capable de stocker la carte de parcours numérisée, incluant l'emplacement de drapeau ;
un module de position (120) avec une antenne recevant des données de localisation ;
un processeur ou un microprocesseur (105), répondant au module de position (120), à partir duquel l'emplacement du dispositif d'information de localisation (100) sur le parcours de golf et la distance du dispositif d'information de localisation (100) à l'emplacement de drapeau peuvent être déterminés ; et
un dispositif d'affichage (125) pour afficher la distance du dispositif d'information de localisation (100) à l'emplacement de drapeau.
